# EUROPEAN PATENT APPLICATION

(11) **EP 1 262 954 A1**
(43) Date of publication of application: **04.12.2002**
(21) Application number: 01112824.6
(22) Date of filing: 30.05.2001
(51) Int. Cl.: G10L 15/22

(54) **Method and apparatus for verbal entry of digits or commands**

(71) Applicant: Telefonaktiebolaget L M Ericsson (Publ), 126 25 Stockholm (SE)
(72) Inventor: Armbrüster, Werner, 90542 Eckenthal-Forth (DE); Dobler, Stefan, 91077 Neunkirchen am Brand (DE); Chaplin, Catriona, 22472 Lund (SE)
(74) Representative: HOFFMANN - EITLE

(57) **Abstract**

The present invention relates to a user interactive user friendly speech recognition controller and method of operating the same. The speech recognition controller recognises (S1, S11, S12, S20, S27) at least one keyword in a speech utterance enunciated by a user and obtains (S2, S7, S13, S24, S40) for said at least one recognized keyword a recognition reliability which indicates how reliably said at least one keyword has been recognized correctly by the speech recognition controller. It then compares (S3, S26, S41) said reliability with a recognition reliability threshold and if said obtained reliability is lower than said recognition reliability threshold, it provides (S4, S14, S32, S35) an unreliability indication to the user (S4, S14, S32). In response to said unreliability indication it recognises at least one further keyword and then corrects said at least one recognized keyword based on said at least one further keyword recognized in response to said unreliability indication to the user.

## Description

The present invention relates to a speech recognition controller as well as to a method of operating the same, for verbal user interactive entry of digits and/or commands e.g. into a mobile telephone.

Speech control of mobile telephones is at the verge of becoming a standard feature. Today, a well-known application of speech control in the context of mobile telephony is a feature which may be called name dialling. According to this feature, the user speaks the name of a person to be dialled, and if the speech controller of the mobile telephone was able to recognize the spoken name, it would cause the telephone to automatically dial the number stored in the telephone in association with the recognized name. This feature allows the user to call persons by speaking their name, provided the user has trained the telephone in advance to enable the telephone to recognize the spoken names properly.. This feature is provided to make telephone calls to frequently called parties more convenient to the user.

A further reaching approach of controlling mobile telephones via user speech allows the user to dial individual digits by speech. The user speaks the digit sequence of a desired telephone number, and the telephone performs the digit dialling operation in accordance with the digits recognized. While for name dialling, the ability to recognize isolated keywords would be sufficient, this ability would be unsatisfactory for digit dialling because it would mean that the user has to speak the desired telephone number digit by digit. After each digit the user would have to wait until the system has finished the recognition process and has provided feedback to the user what the telephone has recognized, in order to allow the user to verify the entered digit. Obviously, this would be inconvenient for the user, and the preferred technology to overcome these drawbacks is the connected word or connected digit recognition. This technology allows the user to speak a sequence of keywords or digits without having to separate the digits/keywords by pauses, such that connected keyword/digit recognition provides a more natural way for verbally entering digits and commands. In the following, the term keyword shall include all kinds of user utterances corresponding to a digit or a command to be entered verbally.

A speech recognition system is not a perfect system. A keyword will be recognized with a certain error rate which is larger than zero. When entering a string of connected keywords, the error rate that at least one of the keywords in the string will be recognized erroneously, grows in proportion to the length of the string, that is the number of connected keywords constituting the string. The recognition error rate depends on environmental factors like background noise, distance between the speaker and the microphone of the telephone, room acoustics and the like. Under certain environmental conditions the error rate will be higher than under more favourable conditions which are easier to handle by the speech recognition controller.

From J. E. Holmgren: "Toward Bell System Applications of Automatic Speech Recognition" in the Bell System Technical Journal, Vol. 62, No. 6, July-August 1983, pages 1865 to 1880 a user speech control method is known, wherein the user enters numbers in groups of four digits or less into a system able to recognize connected speech. The user waits for the numbers to be repeated back to him, before speaking the next group. If the numbers are repeated incorrectly, the user says the word "error" and then repeats the last group of numbers spoken.

A similar concept for mobile telephones is known from EP 0 389 514. The system known from this document allows the user flexibility in entering variable-length strings of digits and in controlling the verification process by selectively pausing between the digit strings. In the known system, if high recognition accuracy is expected, the user can quickly enter the entire digit sequence without pauses. Alternatively, under conditions where recognition accuracy is degraded, the user has the option of requesting verification on partial sequence digit strings by pausing after any number of digits are spoken.

Accordingly, in the known system feedback is given whenever a group of digits, i.e. a partial sequence digit string has been entered and recognized. This feedback is required to provide the user with an opportunity to verify whether the recognition result is satisfactory. If the recognition error rate is high, in the known system the user will enter the digit sequence as a larger number of small groups of digits, such that during the digit entry the user will be interrupted frequently. Under more favourable environmental conditions, the user will operate the known system by means of speaking a fewer number of groups of digits with a larger number of digits in each group. However, the verification of a larger group of digits requires the user to carefully listen to a larger number of digits in the course of the verification process, and even if no more than a single digit in the larger group of digits has been recognized erroneously, a re-entry of the entire group is inevitable.

Therefore, the known way of entering digit sequences still requires improvement with respect to its user friendliness. It would be desirable to provide a speech recognition controller suitable e.g. for a mobile telephone and a method of operating the speech recognition controller, which allows a simplification of the verbal keyword entry process for the user as well as a reliable and efficient entry of keyword sequences under varying environmental conditions in a manner convenient for the user.

The present invention is defined in the appended claims.

According to an embodiment of the present invention, the speech recognition controller obtains for each recognized keyword a recognition reliability level which indicates how reliably the keyword has been recognized by the speech recognition controller. If the reliability level is below a recognition reliability threshold, an unreliability indication is provided to the user. If the speech recognition controller indicates an insufficient recognition reliability for a keyword, the user takes appropriate action to ensure that the keyword is entered correctly.

The recognition reliability can be a confidence measure obtained by the speech recognition controller or a measure which indicates a probability that the recognized keyword corresponds to the keyword enunciated by the user. Obtaining reliability measures is as such well known in the art of speech recognition and all methods and algorithms for obtaining a recognition reliability measure are intended to be comprised in the scope of the present invention. Examples of such algorithms are described for instance in a paper by Thomas Schaaf and Thomas Kemp: "Confidence measures for spontaneous speech recognition" in Proceedings ICASSP 1997 pp. 875 to 878. This reference relates to large vocabulary natural language recognition. Large vocabulary recognizers use in addition to the computation of the probability of a word also the computation of a language model probability. This language model describes the probability of word combinations or even the probability on a sentence level. Another example may be found in a paper by Bernd Souvignier and Andreas Wendemuth: "Combination of Confidence Measures for Phrases" in Proceedings ASRU - Automatic Speech Recognition and Understanding Workshop 1999, Keystone Colorado, USA. This article describes the combination of different confidence measures on a word by word level. For each word in a phrase a confidence (or reliability) parameter is generated, describing the likelihood of the recognized word. The confidence parameter is generated form a set of 8 parameters such as e.g. a probability difference between first and second best match. Either a neural network to combine these parameters into one confidence parameter or a linear combination of these parameters can be used. Further examples may be found in A. Wendemuth et al.: "Advances in Confidence Measures for Large Vocabulary" in ICASSP 1999, Phoenix, USA, pp. 705-708. However, as will be apparent to those skilled in the art, any means for obtaining a recognition reliability for a recognized keyword may be utilized.

Further advantageous embodiments are given in the dependent claims.

According to a preferred embodiment of the present invention, the user does not have to perform the verification of the recognized keywords. It can be sufficient for a user-friendly system to inform the user if a keyword was recognized with a low level of confidence by the speech recognition controller. A verification step during the keyword entry procedure involving the cooperation of the user to compare one or more keywords recognized by the speech recognition controller with one or more keywords spoken and memorized by the user can advantageously be dispensed with. Advantageously, there is no need for the user to invoke a correction mode. Rather, the speech recognition controller invokes a correction mode if a keyword has been recognized with an insufficient recognition reliability. This provides a high degree of user friendliness and convenience together with the ability of the verbal keyword entry procedure to efficiently adapt to varying environmental conditions like background noise, room acoustics and the like.

According to an embodiment of the present invention, the recognition reliability information obtained during the speech recognition process is compared with a reliability threshold as soon as a keyword has been recognized, and an unreliability indication is provided instantaneously if the reliability is below the threshold. This results in a very fast system reaction on possible recognition problems but might interrupt the user already speaking the next keyword.

According to a preferred embodiment, the user enters a sequence of digits and/or commands in groups consisting of a variable user selectable number of connected or unconnected keywords, the user defining the groups by inserting periods of speech inactivity that are greater than or equal to a predetermined length of time, i.e. by pausing, or by uttering group control command keywords like "OKAY?". The recognition reliability is evaluated for each recognized keyword in a group. If for at least one keyword in a group the recognition reliability is insufficient, an unreliability indication is provided to the user after the user having completed the entry of the entire group, e.g. in response to a pause signal generated when a pause in the user speech utterance exceeds a predetermined pause time interval, or in response to the speech recognition controller having recognized a group control command keyword. Alternatively or additionally, the recognition reliability may be evaluated for the entire group based on a product, sum or average of the reliability levels obtained for the respective keywords in the group, by comparing the product, sum or average against a reliability threshold. The group associated with the unreliability indication will be subject to correction based on the next group of keywords enunciated by the user in response to the unreliability indication. Advantageously, if all keywords in a group have been recognized with a sufficient recognition reliability, the speech recognition controller outputs a visual or preferably acoustical confirmation like "OKAY!" to the user in order to let the user know that the group of keywords just entered has been recognized reliably.

According to an advantageous embodiment, if the recognition reliability for a recognized keyword is insufficient, the unreliability indication is provided to the user by means of repeating to the user all recognized keywords up to the keyword for which the recognition reliability was too low. The next keyword recognized with a sufficient reliability level will then be appended to the string of keywords which have so far been recognized with a sufficient level of reliability. According to a modification of this embodiment, only a predetermined number of most recently recognized keywords is repeated to the user, or all those keywords are repeated which have not yet been repeated to the user since the occurrence of the previous unreliability indication in the course of the verbal keyword sequence entry procedure.

Further advantageously, the user additionally has the option to selectively verify a recognized keyword or a group of recognized keywords in response to the speech recognition controller recognizing a verification command like "REPEAT" enunciated by the user. This option primarily serves to achieve that a user may gain confidence in the ability of the speech recognition controller to correctly obtain the recognition reliability and ask the user for keyword re-entry in situations where a proper recognition of a keyword has not been achieved.

According to a further advantageous embodiment, if for a first recognized keyword the recognition reliability is insufficient, the speech recognition controller uses not only the speech recognition parameters obtained during the recognition process for the further keyword enunciated by the user in response to the unreliability indication, but also parameters obtained from and stored during the recognition process for the first keyword, for recognizing the further keyword. Since the user will repeat the first keyword if the speech recognition controller outputs an unreliability indication, the keyword enunciated by the user after the unreliability indication may be expected to be similar to the keyword the recognition of which was unreliable. Combining recognition parameters for the first and the further keyword e.g. by averaging offers an enlarged volume of information for the speech recognition controller which improves the recognition reliability for the further keyword. In this way a reliable recognition may become possible in situations wherein due to adverse environmental conditions a reliable recognition based on a single enunciation of a given keyword is not possible. It will be apparent that this concept may easily be extended to including more than one repeated utterance of a keyword in the keyword recognition process until the obtained recognition reliability is sufficient to exceed the reliability threshold.

In the following, embodiments of the invention will be described in detail with reference to the accompanying drawings wherein
Fig. 1 shows a block diagram of a speech recognition controller for a speech communications device employing the keyword entry method according to the present invention;
Fig. 2 shows a flow chart illustrating the specific sequence of operations performed by the speech recognition controller according to a first embodiment of the present invention;
Fig. 3 shows a flow chart illustrating the specific sequence of operations performed by the speech recognition controller according to a second embodiment of the present invention; and
Fig. 4 shows a flow chart illustrating the specific sequence of operations performed by the speech recognition controller according to a third embodiment of the present invention.

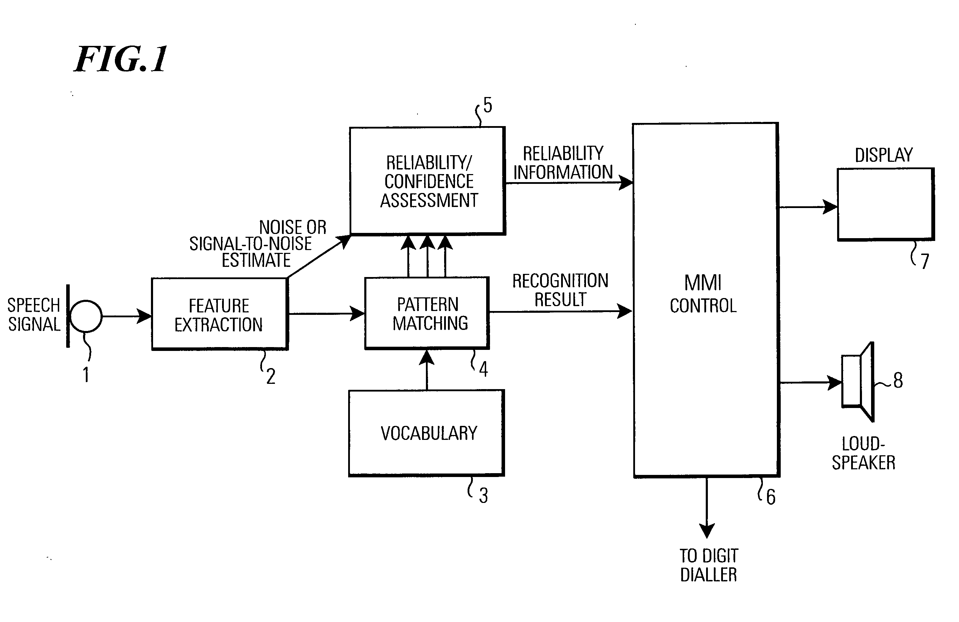

Fig. 1 shows a block diagram of a speech recognition controller for a speech communications device like a mobile telephone, employing the verbal keyword entry method according to the present invention. In Fig. 1, reference numeral 1 denotes a microphone for converting an acoustic speech signal into a corresponding electrical signal. Conveniently, the microphone 1 is the microphone anyway present in the mobile telephone. Reference numeral 2 denotes a feature extractor. This extractor receives a signal from the microphone 1 and extracts characteristic features from this signal by means of transforming the speech signal into a parametric description in the time frequency domain. For this feature extraction operation the fourier transform is suitable. The feature extractor 2 generates and outputs a feature vector describing characteristic elements of the speech signal input by a user via the microphone 1. Reference numeral 3 denotes a vocabulary store for storing a plurality of feature patterns of keywords which constitute the vocabulary of the speech recognition controller. Each feature pattern is characteristic for a particular keyword recognizable by the speech recognition controller. The store 3 may simply be a read only memory (ROM) of any known type. Preferably, the memory 3 is of the EEPROM type or flash memory type and also allows a modification of particular stored feature patterns in order to extend or modify the vocabulary available for the speech recognition controller, or to adapt stored feature patterns to particular speech characteristics of the individual user.

Reference numeral 4 denotes a pattern matcher which receives an extracted feature pattern from the feature extractor 2 and which furthermore retrieves feature patterns from the vocabulary store 3. The pattern matcher 4 analyses whether any of the feature patterns stored in memory 3 matches with a feature pattern provided by the feature extraction block 2 or a portion of the feature pattern. If a match has been found, a keyword has been recognized and block 4 provides the recognition result as an output.

The speech recognition algorithm embodied in feature extractor 2, vocabulary store 3 and pattern matcher 4 preferably incorporates speech energy normalization in the feature extractor 2, as well as dynamic time warping and an appropriate distance metric in the pattern matcher 4 to determine a feature pattern match. A suitable algorithm for connected word recognition is described in the article with the same title by J.S. Bridle, M.D. Brown and R.M. Chamberlain, in IEEE International Conference on Acoustics, Speech, and Signal Processing (May 3-5, 1982), vol. 2, pp. 899-902.

Reference numeral 5 denotes a reliability/confidence estimator. This estimator receives parameters like distance metrics from the pattern matcher which indicate a degree of similarity of the best match found, and also indicate a degree of similarity of at least one second best match found by the pattern matcher 4. These parameters are used by the reliability/confidence estimator 5 to obtain reliability information regarding the recognition result output by the pattern matcher 4. Specifically, the pattern matcher 4 obtains in accordance with a similarity criterion, for instance a Chebyshev distance metric, a Euclidean distance metric or any other suitable metric, a first similarity value between the best matching feature pattern found in the vocabulary store 3, and the feature vector provided by the feature extraction block 2. The pattern matching block 4 also provides to the reliability/confidence estimator 5 further similarity values in accordance with a suitable distance metric, which indicate the similarity between other feature patterns stored in the vocabulary store 3 and the feature vector from the feature extractor 2. The reliability/confidence estimator 5 then obtains the recognition reliability based on a difference between the first similarity value and the similarity value associated with the second best match found by the pattern matcher 4.

In this context, the reliability/confidence assessment block also takes into account the degree of similarity found for the best match. If the degree of similarity between the feature pattern provided by the feature extractor 2 and the best matching feature pattern found in the vocabulary store 3 is very high, a smaller difference between this similarity and the similarity of second best matches can be tolerated than if the best match has been found to have a medium or low level of similarity. A medium or low level of similarity for the best match is an indication that the recognition reliability may be low, even if there is a significant difference in the similarity degrees between the best match and the second best match.

Also, the reliability/confidence estimator 5 advantageously includes a noise level estimate or a signal to noise ratio estimate for the speech signal in the operation of obtaining reliability information for a particular recognition result. Algorithms of obtaining a noise estimate or a signal to noise estimate for the speech signal are described in depth in the ITU Standard G 723.1 or in the GSM Advanced Multi Rate Standard 06.90. The reliability/confidence estimator 5 takes into account the noise or signal to noise estimate by means of reducing the reliability level found from the similarity differences if the noise level is high or if the signal to noise estimate indicates low SNR. This is because under conditions of high background noise e.g. in a running car, the reliability of a recognition result is likely to be lower than for a low background noise environment. A detailed description of the operations performed by a reliability/confidence estimator 5 suitable for incorporation into a speech controller according to the present invention may furthermore be found in the article of T. Schaaf et al. or in the article by B. Souvignier et al. mentioned above.

Reference numeral 6 denotes a man-machine interaction controller which receives the recognition result from the pattern matching block and which also receives a reliability level for the recognition result from the reliability/confidence assessment block 5. Reference numeral 7 denotes a display for enabling the man-machine-interface controller 6 to visually output recognized digits and/or commands. Reference numeral 8 denotes an electroacoustic transducer, e.g. a loudspeaker for outputting synthesized speech signals to the user. In a mobile telephone environment, the transducer 8 conveniently is the earphone anyway present in the mobile telephone. For controlling the man-machine interaction, controller 6 advantageously includes a speech synthesizer (not shown) which is able to translate a recognized keyword into a synthetic speech output and which is furthermore able to generate synthetic replies like "OKAY" or "PLEASE REPEAT" to the user. A suitable speech synthesizer may be found in J.P. Holms, "The JSRU Channel Vocoder" in IEE Proc., vol. 127, Pt.f, no. 1, February 1980, pp. 53-60. However, as will be apparent to those skilled in the art, any speech synthesis apparatus may be utilized. Moreover, any means of providing an indication to the user would perform the basic unreliability indication function if the reliability level obtained by the reliability/confidence assessment block and passed on to the man-machine interaction controller 6 is below a given recognition reliability threshold. Those skilled in the art will appreciate that it is merely a matter of design choice whether the man machine interaction controller compares a reliability level received from the reliability/confidence estimator 5 with a reliability threshold or whether this comparison is performed in the estimator 5. In the latter case the man machine interaction controller would receive a binary signal from the estimator 5 which indicates whether the recognized digit has been reliably recognized or not.

The man-machine interaction controller 6 is the heart of the speech recognition controller in the embodiment shown in Fig. 1. The detailed operation of the man-machine interaction controller 6 will subsequently be described in terms of software flowcharts for this controller. The man-machine interaction controller 6 as well as the feature extractor 2, the pattern matcher 4 and the reliability/confidence estimator 5 are advantageously implemented in a digital signal processor running under program control. Before turning to the detailed description of the program controlled operation of the man-machine interaction controller 6 and the remaining constituent components of the speech recognition controller shown in Fig. 1, in the following an example will be given to illustrate how the entry of a particular digit sequence in a noisy environment can be embodied. This example clearly illustrates features and advantages of the present invention.

Lets assume that the user desires to enter the complete digit sequence 1-2-3-4-5-6-7-8 into a speech controlled device like a mobile telephone, incorporating a speech recognition controller as shown in Fig. 1. According to this example, the user is free to divide the keyword sequence into one or more partial sequence keyword groups. The user is furthermore free to enunciate the keywords either in connected fashion or in isolated fashion, that is separated by periods of speech inactivity.

At the beginning of the exemplary keyword entry procedure, the telephone enters a mode of verbally entering keyword sequences in response to the user speaking a predetermined command keyword like LISTEN or by pressing a function key on the key pad of the mobile telephone. In this mode, a cursor appears in the LCD display of the telephone. Whenever the user speaks a digit or command, the telephone performs keyword recognition and evaluates a reliability measure for each recognized digit or command. As soon as a pause made by the user following a group of keywords is larger than a predetermined pause time interval, the speech recognition controller and particularly the man-machine interaction controller 6 checks whether the recognition reliabilities of all digits of that group are above a suitable reliability threshold. If the man-machine interaction controller 6 finds this to be the case, it generates a synthesized speech signal like OKAY to indicate to the user that this group of digits was recognized properly. The user then continues with the entry of the keyword sequence by means of speaking a next group of digits.

If for at least one digit in this group the recognition reliability was found to be below the reliability threshold, the telephone informs the user by means of outputting a synthesized speech signal like "PLEASE REPEAT", that the last spoken group was not recognized properly. In addition to this unreliability indication, the man-machine interaction controller 6 may clear the digits belonging to the last entered group from the display or may flash those digits of this group in the display, for which the recognition reliability was below the threshold. A group of digits enunciated by the user in response to the speech indication "PLEASE REPEAT" then replaces the group of digits for which the unreliability indication was given.

The skilled reader will appreciate that in this example there is no need for the man-machine interaction controller 6 to repeat a group of digits if in that group a recognition reliability below the reliability threshold occurs. Also, the user does not have to participate in the verification of digit sequences, and no particular command keyword has to be provided by the user in order to enter a correction mode during the verbal entry of keyword sequences.

In this example, whenever the telephone recognizes a spoken utterance to correspond to one or more digits, the recognized digits are immediately placed in the display 7 at the current position of the cursor. This happens regardless whether the user speaks the digits as a continuous string or in isolated fashion. With every recognized digit the curser in the display moves on by one position to that location where the next recognized digit will be placed, such that in the progress of recognizing digits in the speech utterance enunciated by the user, a digit string builds up in the display. Advantageously, in addition to speaking a digit the user may furthermore have the option to use the keypad to enter the digit.

If the user verbally enters a command like REPLAY or presses a function key, the man-machine interaction controller 6 replays all digits in the display by means of speech synthesizing the corresponding keywords and outputting them via the loudspeaker 8. The man-machine interaction controller 6 will clear all recognized digits in response to the user speaking a command keyword like CLEAR or by pressing a function key. The verbal keyword entry mode is left by means of the user speaking a command keyword like "DIAL" or pressing a function key. In response to the recognition of this command keyword, the man-machine interaction controller 6 will output the entered digit sequence to other system sections like a telephone number dialling section in a mobile telephone and terminate the verbal keyword entry mode. Of course, other display and control functions may be envisaged. For instance, placing the string of recognized digits in the display and/or replaying them acoustically may be deferred until the user speaks a command like REPLAY or DIAL. Upon recognition of a particular command like YES the system may inform the user of what digits were recognized, and ask the user for confirmation that the number should be dialled. Editing command keywords like NO may be provided to offer a possibility for the user to correct the last entered digit only.

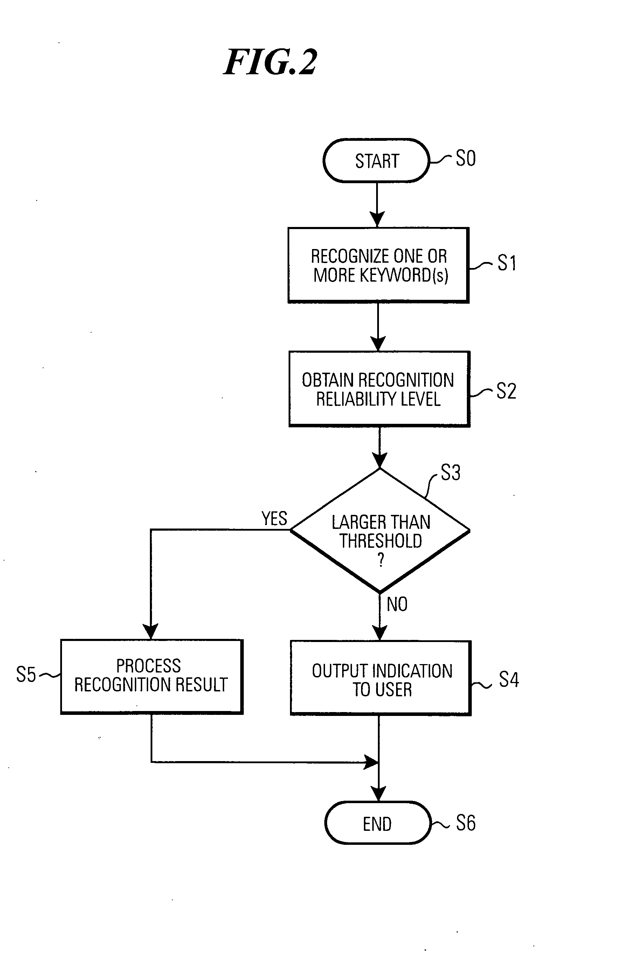

Fig. 2 shows a flow chart illustrating the specific sequence of operations performed by the speech recognition controller in accordance with a first embodiment which implements the present invention in a basic yet efficient manner. In this flowchart, operation S0 denotes the beginning of the verbal keyword entry procedure according to this embodiment. Reference numeral S1 denotes the operation of recognizing one or more keywords in a speech utterance enunciated by the user and received by the speech recognition controller through the microphone 1 in Fig. 1. The operation S1 involves feature extraction based on the speech signal from microphone 1 as well as a pattern matching operation based on a stored vocabulary of feature patterns, and furthermore selecting that one or more patterns from the vocabulary which best matches with the feature pattern extracted from the input speech signal.

Operation S2 is shown in Fig. 2 to follow the operation S1. In this operation S2, a recognition reliability level is obtained for each of the keywords recognized in the operation S1. The next operation in the flow diagram of Fig. 2 is the operation S3 wherein the man-machine interaction controller 6 in Fig. 1 compares the recognition reliability level obtained I operation S2 against a reliability threshold. This reliability threshold can in turn depend on a background noise level determined by the feature extractor, and/or on a signal to noise ratio of the speech signal. It can furthermore depend on the recognized keyword, in order to take into account that some keywords in the vocabulary of the speech recognition controller are inherently closer to each other than other keywords, such that in case a recognized keyword belongs to a group of inherently more similar keywords, the recognition reliability threshold can be selected higher than in case an inherently distinct keyword has been recognized.

If in the operation S3 it has been found that the recognition reliability level is larger than the reliability threshold, the program flow proceeds to operation S5 where the recognition result obtained in the operation S1 is processed, i.e. passed onto the digit dialler or stored in a digit memory where the complete number to be dialled is assembled before it is passed onto the digit dialler. If a command keyword like CLEAR has been recognized, the operation S5 will execute the recognized command.

On the other hand, if in the operation S3 it is found that the recognition reliability level is below the reliability threshold, the program flow proceeds to operation S4 wherein an unreliability output is provided to the user, e.g. by means of generating a signal tone or synthesizing a speech information output like "PLEASE REPEAT" to the user. The operation S4 of this embodiment does not process the recognition result obtained in the operation S1 Rather, in this case the recognition result is effectively discarded.

With S6 the flow of operations S0 to S6 has been accomplished. This flow of operations may be repeated as often as necessary for recognizing further keywords. From the flow diagram of Figure 2 it is apparent that if the flow of operations proceeded through the operation S4, the next flow of operations through operation S5 will effectively correct the keyword previously recognized with a reliability level lower than the reliability threshold, without the user having to participate in a verification operation and without the user having to enter a command which would cause the speech recognition controller to enter a correction mode. The embodiment of Fig. 2 shows a basic yet efficient approach in accordance with the present invention of a user-friendly process of verbally entering keyword sequences.

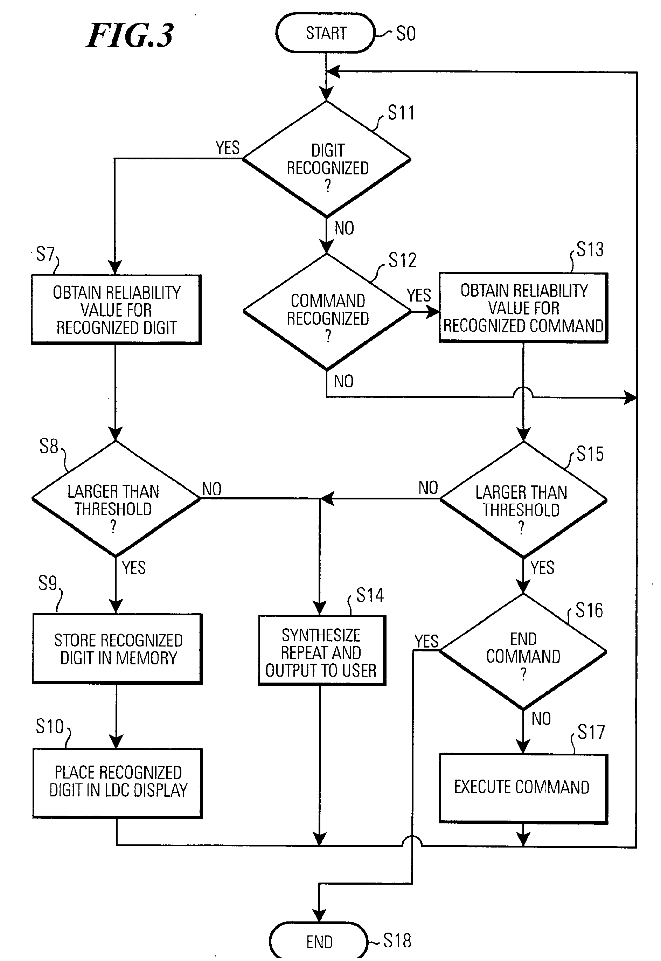

Fig. 3 shows a flowchart illustrating the specific sequence of operations performed by the speech recognition controller according to a second embodiment of the present invention. In this figure, S0 denotes the beginning of the program flow. Operation S11 checks whether the pattern matcher in cooperation with the feature extractor and the vocabulary store have recognized a new digit in the signal provided by the microphone 1. If no new digit has been recognized in operation S11, the program flow proceeds to the operation S12. In this operation it is checked whether a new command keyword has been recognized by the pattern matcher 4 in cooperation with the feature extractor 2 and the vocabulary store 3. If no new command was recognized, the program flow goes back to the operation S11, thus constituting a loop which continuously checks whether the pattern matcher found a new digit or command entered via the microphone 1.

Operation S7 is executed if in the operation S11 it was found that a new digit has been recognized. In S7 a reliability value for the recognized digit is calculated. For this purpose the operation S7 retrieves distance metrics from the pattern matcher 5 concerning the best match found, as well as a noise level or a signal to noise ratio estimate from the feature extractor 2, as described above. The program flow then proceeds to operation S8 where the calculated reliability value for the recognized digit is compared with a reliability threshold. The operation S8 involves the calculation of the reliability threshold prior to comparing the obtained reliability value with the calculated threshold. For calculating the reliability threshold, the operation S8 takes into account whether the keyword recognized by the pattern matcher 4 is an inherently distinct keyword or belongs to a group of keywords which are inherently more similar to each other. The operation S8 then compares the reliability value obtained in operation S7 with the reliability threshold thus obtained.

If in operation S8 it is found that the reliability value for the recognized digit is above the recognition reliability threshold, the program flow proceeds to operation S9 where the recognized digit is stored in a digit memory wherein a digit sequence is assembled for use by a digit dialler once the digit sequence is complete. The program flow proceeds to operation S10 wherein the recognized digit is furthermore placed in the LCD display of the telephone in order to provide a visual information to the user which digit was recognized.

From operation S10 the program flow proceeds back to the operation S11 already described.

On the other hand, if in the operation S8 it has been found that the reliability value is below the reliability threshold calculated in the operation S8, the program flow proceeds from operation S8 to operation S14. In operation S14 the speech recognition controller generates an unreliability indication to the user by synthesizing an information keyword like REPEAT and outputting the same via the loudspeaker 8 to the user. In this case, the recognized digit is accordingly not stored in the digit memory. Rather, if the recognition reliability is below the reliability threshold, the recognized digit is discarded in this embodiment and not placed in the LCD display. In this way, the next digit enunciated by the user in response to the unreliability indication generated in operation S14, will effectively correct the digit that was previously recognized with a recognition reliability below the reliability threshold.

If in operation S12 it is found, that a command keyword has been recognized, the program flow leaves the loop established by the operation S11 and S12 and proceeds to the operation S13, where similar to the operation S7, a recognition reliability value for the recognized command keyword is calculated. The program flow proceeds to operation S15 where the reliability value obtained in operation S13 is compared with a recognition reliability threshold calculated in this operation in a fashion similar to that what has been described above with respect to operation S8. If in operation S15 it is found that the recognition reliability value obtained in operation S13 is lower than the threshold of operation S15, the program flow proceeds to the operation S14 wherein an unreliability indication is generated and output to the user via the loudspeaker, before the program flow returns to the operation S11 in order to wait for further keywords verbally entered by the user. In this case the keyword recognized in operation S12 is simply discarded.

On the other hand, if in operation S15 it is found that the recognition reliability value for the recognized command keyword is larger than the recognition reliability threshold, the program flow proceeds to operation S16 which compares the recognized keyword against an end command keyword like END. If the recognized keyword is the END command, the program flow proceeds to operation S18 which terminates the verbal keyword entry procedure shown in Fig. 3. On the other hand, if in operation S16 it is found that the recognized command keyword is not the end command, the program flow proceeds to operation S17 in order to execute the recognized command. If this is a command for dialling the entered digit sequence, operation S17 will retrieve the digit sequence previously assembled in the operation S9, as described above, and will pass this sequence onto a digit dialling control operation in the mobile telephone in order to establish a connection with a remote subscriber in accordance with the dialled digit sequence. This digit dialling operation is conventional and well-known to those skilled in the art of mobile telephony. Preferably, the operation S17 is furthermore able to process other commands e.g. relating to editing functions provided for the users' convenience. Keyword commands like FORWARD and BACK can be provided for processing by operation S17 in order to move a curser in the LCD display 7 of the mobile telephone and correspondingly move a pointer in the digit memory administrated in operation S9. Such editing functions and associated commands can be very convenient for the user in order to deal with the situation that the user has erroneously spoken a wrong digit which was reliably recognized by the speech recognition controller.

In the flow diagram of Fig. 3, the correction mechanism for handling the recognition of a digit or command keyword with an insufficient recognition reliability is simple yet efficient. However, it can be advantageous to refine this mechanism as described below, in order to enhance the ability of the speech recognition controller to recognize keywords correctly even under adverse environmental conditions like a high level of background noise and so on. In order to further enhance the ability of the speech recognition controller to correctly recognize digits and/or command keywords, it may be advantageous to modify the flow of operations shown in Fig. 3 as follows.

If in operation S8 it is found, that the recognition reliability value obtained in operation S7 is below the recognition reliability threshold, the operation S8 stores speech recognition parameters obtained during the operation S11 of recognizing the keyword in a random access feature pattern memory. Specifically, the speech recognition parameters stored in this case in operation S8 is the feature pattern obtained in operation S11 in connection with recognizing the digit. Operation S8 furthermore sets a flag which indicates that a feature pattern is available in the feature pattern memory which is representative of a digit the recognition of which was not reliable. This flag is checked in operation S11 when recognizing the next digit enunciated by the user in response to the unreliability indication generated in operation S14. If the operation S11 finds this flag to be set, the operation S11 will base the digit recognition not only on the feature pattern provided by feature extractor 2 for the current digit, but will furthermore incorporate into the recognition process the feature pattern stored in the feature pattern memory.

Specifically, the digit recognition process can in this case provide a feature pattern to the pattern matcher 4 which is an average obtained from the feature pattern stored in the feature pattern memory and the feature pattern recently provided by the feature extractor 2. By using both the feature pattern parameters stored in the feature pattern memory and the current feature pattern for recognizing a digit, it is possible to remove random disturbances from the feature pattern used by the pattern matcher 4. The loop S11, S7, S8, S14 can be repeated until the disturbance reduced feature pattern thus obtained, allows a reliable recognition by the pattern matcher 4. Similar modifications may be provided in the operations S15 and S12 in order to improve the ability of the speech recognition controller to recognize command keywords under adverse environmental conditions.

The embodiment of figure 2 described above provides a user friendly method of verbally entering a sequence of keywords which will request the user to correct a recognized keyword if the speech recognition controller found the keyword recognition to be unreliable. As soon as the speech recognition controller determines that the recognition of a keyword is unreliable, the user is simply asked to correct the recognized keyword in response to the unreliability indication. If the recognition was reliable, the speech recognition controller is ready for recognizing the next keyword without further user verification being necessary. According to this embodiment, there is no necessity for the user to participate in the verification of recognized keywords.

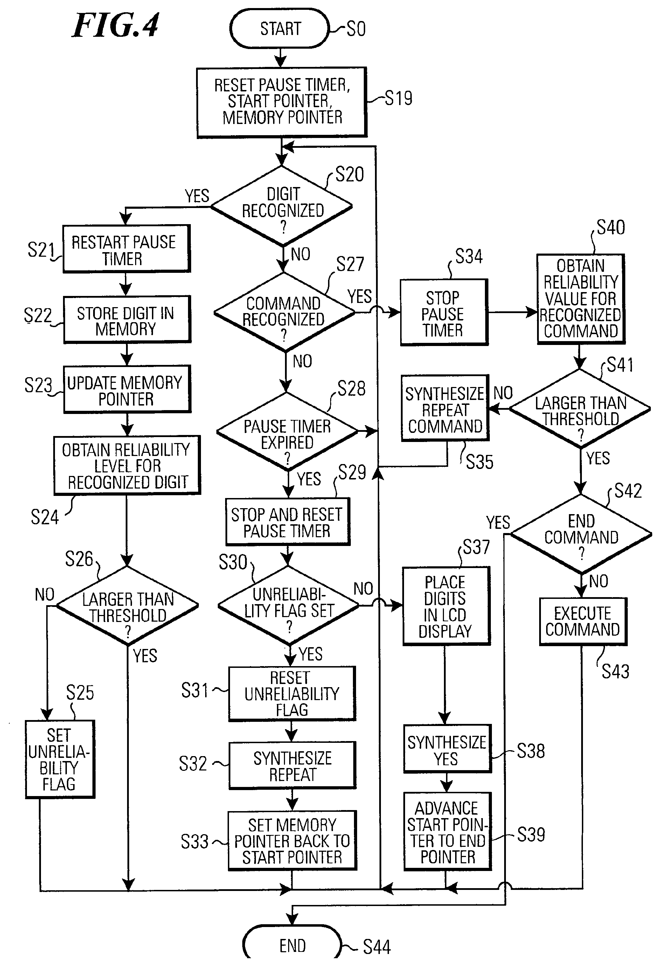

Figure 4 shows a flow chart illustrating the specific sequence of operations performed by the speech recognition controller according to a third embodiment of the present invention. This embodiment allows the user to enter keywords in groups separated by speech pauses, each group having an arbitrary user determined number of keywords. After each group of keywords the speech recognition controller confirms to the user if the group was recognized properly. If a keyword of the group was recognized with an insufficient reliability level, the speech recognition controller indicates this by means of generating an unreliability indication to the user, and allows the user in response to the unreliability indication to repeat the last group, in order to correct the unreliable recognition of one or more keywords in the last group. In this embodiment, there is no need for the user to verify the correctness of recognized keywords, and no necessity for a user invoked correction mode if a group of keywords has not been recognized with a sufficient reliability. Of course, the provision of a user invoked correction mode would be optional and can be advantageous for correcting errors made by the user.

Specifically, in Fig. 4, the operation So denotes the beginning of the program flow for verbally entering a keyword sequence. S19 denotes an operation following the operation S0, wherein various initialisations are performed, like resetting a pause timer and resetting memory control pointers like a start pointer and a memory pointer. The pause timer is conveniently constituted by a counter. Once the pause timer is started, the counter begins to count with a predetermined clock rate. The timer expires as soon as the counter has reached a predetermined count. In operation S19, the counter is reset but not yet started. The start pointer and the memory pointer are used for controlling a digit memory for assembling therein a digit sequence which after completion may be passed onto a digit dialler of a mobile telephone. The start pointer indicates the memory location of the most recent digit the proper recognition of which has already been confirmed to the user, while the memory pointer indicates the location of the most recently recognized digit in the digit memory.

Having performed the necessary initialisation in operation S19, the program flow proceeds to operation S20 where it is checked whether the speech recognition controller and in particular the pattern matcher 4 in cooperation with the feature extractor 2 and the vocabulary store 3 has recognized a new digit verbally entered by the user. A detailed explanation of this operation has been given above. In the affirmative, whenever the operation S20 found that a new digit has been recognized, the program flow proceeds to operation S21 where the pause timer is restarted, that is reset and started. The program flow proceeds to operation S22 where the recognized digit is stored in the digit memory at the location currently pointed at by the memory pointer. The memory pointer is then updated in operation S23. The program flow proceeds to operation S24, where a reliability level for the recognized digit is calculated. A detailed description of the reliability level calculation was given above. The program flow proceeds to operation S26 where it is checked whether the reliability level obtained in operation S24 is larger than the applicable reliability threshold. Again, details on how to obtain a reliability threshold have been given above.

If in operation S26 it is found that the reliability level obtained in S24 is larger than the reliability threshold, the program flow proceeds back to operation S20. If the reliability level was lower than the reliability threshold, the program flow proceeds from S26 to the operation S25 wherein an unreliability flag is set, indicating that a keyword has been recognized with an insufficient recognition reliability. From S25 the program flow proceeds back to the operation S20.

If in the operation S20 it is found, that there is no newly recognized digit, the program flow goes on to operation S27 where it is checked whether a command keyword has been recognized by the pattern matcher 4 in cooperation with the feature extractor 2 and the vocabulary store 3. If no command has been recognized, the program flow continues with operation S28 which serves to check whether the pause timer has expired. If this is not the case, the program flow goes back to operation S20 and will continue to loop through the operations S20, S27, S28 until either a next digit has been recognized in operation S20 or a next command has been recognized in operation S27.

If it is found in operation S28 that the pause timer has expired, the program flow proceeds to operation S29. The fact that the pause timer has expired, indicates that the entry of a group of at least one digit has been completed. Accordingly, in operation S29 the pause timer is stopped and reset. The program flow proceeds to operation S30 where it is checked whether the unreliability flag is set or not. If the unreliability flag is found in S30 to be set, the program flow proceeds to operation S31 in order to reset the unreliability flag, and then to operation S32 where an unreliability indication relative to the last entered group of digits is provided to the user by synthesizing a speech indication like REPEAT which is output by loudspeaker 8 to the user. The program flow proceeds to operation S33 where the memory pointer is set back to the start pointer in order to discard all digits in the group just entered, because it contains at least one keyword which was recognized with an insufficient reliability level. From the operation S33 the program flow continues with the operation S20.

If, on the other hand, in operation S30 it is found that the unreliability flag is not set, the program flow proceeds to the operation S37 in order to place the digits of the last entered group in the LCD display. The fact that in operation S30 the unreliability flag was found to be clear, indicates that all digits in this group have been recognized with a sufficient reliability level, that is above the respectively applicable reliability threshold. According to an alternative arrangement, the recognized digits are not placed in the display in operation S37, but as soon as they have been recognized, for instance in operation S22. According to this modification, the operation S37 would be in the affirmative branch of operation S30, for instance associated with operation S33, and would clear the digits from the display which belong to the just entered group of keywords, if that group suffers from an insufficient recognition reliability.

In the negative branch of operation S30 the program flow then proceeds to operation S38 where a speech signal like YES is synthesized by the speech synthesizer and output via the loudspeaker 8 to the user, in order to confirm to the user that the last group of digits was recognized properly. The program flow proceeds to operation S39, where the start pointer of the digit memory is advanced to point at the same location as the memory pointer, which is the first digit location of the next group of digits possibly entered by the user. From S39 the program flow then proceeds to operation S20 in order to enter into the loop of operations S20, S27, S28 until the next digit or the next command is recognized.

If in the operation S27 a command keyword has been recognized, the program flow proceeds from S27 to the operation S34 which ensures that the pause timer is not running. This operation S34 achieves that command keywords are not treated as a member of a group of keywords currently entered. Rather, as soon as a command keyword has been recognized, processing the command keyword takes priority over the digits belonging to the current digit group, as will be apparent from the description of the following operations.

The operation S40 follows S34 and calculates a reliability value for the recognized command keyword, in accordance with a reliability calculation mechanism described above. The program flow then proceeds to operation S41 where it is checked whether the reliability value obtained in operation S40 is larger than the applicable recognition reliability threshold obtained in accordance with the mechanism described above. If the recognition reliability is larger than the threshold, the program flow continues with operation S42 which checks whether the recognized command is the end command. In the affirmative, the program flow terminates at operation S44. If the recognized command is not the end command, the program flow proceeds to operation S43 where the recognized command is executed. Operation S43 is similar to the operation S17 discussed in connection with Fig. 3. Moreover, depending on the recognized command to be executed, the operation S43 will access and/or modify the start pointer and/or the memory pointer in order to execute commands relative to a keyword group like synthesizing and replaying the last group of recognized keywords upon user request, cancelling the last group of keywords upon user request, or digit related editing commands like moving a cursor back and forth in the LCD display and correspondingly moving the start pointer and memory pointer in the digit memory, in order to allow the user to access or re-enter single selected digits in the digit sequence already assembled in the digit memory. If the recognized command is the DIAL command, the operation S43 transfers the content of the digit memory up to the location pointed at by the memory pointer, to a digit dialler in the mobile telephone in order to execute digit dialling procedures based on the entered digit sequence in accordance with conventional, well known techniques. Operation S43 furthermore controls the pause timer in accordance with the particular command to be executed. For instance, it will stop and reset the pause timer if the entered command relates to clearing the current digit group. Further editing commands like NO may be provided in order to cancel the last entered digit only, which operation will affect the memory pointer.

After execution of the recognized command in operation S43, the program flow proceeds to the operation S20, either to continue the entry of the group of digits, or to wait in a loop established by the operations S20, S27 and S28 for further verbal input of keywords from the user.

If in operation S41 it is found, that the reliability value obtained in operation S40 for the recognized command is below the applicable recognition reliability threshold, the program flow executes the operation S35 before returning to the operation S20. The operation S35 serves to generate an unreliability indication to the user by synthesizing a speech information signal like REPEAT which is output to the user via the loudspeaker 8. The program flow then proceeds to the operation S20 to re-enter into the loop of operation S20, S27, S28 until the user has repeated the command keyword or verbally enters a further digit.

It can be advantageous to refine the operations described in connection with Fig. 4 in the following manner, in order to enhance the ability of the speech recognition controller according to this embodiment, to recognize keyword groups correctly even under adverse environmental conditions like a high level of background noise. According to this modification, in step S22 of Fig. 4 not only the recognized digit is stored in the digit memory, but furthermore the feature pattern provided by the feature extractor 2 is stored in a feature pattern memory. This feature pattern memory accommodates the entire feature pattern of the group of digits currently being entered. In operation S33 a correction flag is set. If it is found in operation S20 that the correction flag is set, the process of recognizing digits will base the digit recognition not only on the current feature pattern provided by the feature extractor 2, but on the average of the feature pattern of the previously entered group which is stored in the feature pattern memory, and the current feature pattern. On the other hand, if in operation S20 the correction flag is found to be cleared, the feature pattern in the feature pattern memory is updated with the feature pattern of the group currently being entered, and the recognition is based on this feature pattern only. According to this modification it is possible to reduce random disturbances in the feature pattern used by the pattern matcher 4, as explained above, until a "clean" feature pattern is obtained for which a reliable recognition by the pattern matcher 4 is possible.

Similar modifications may be provided in the operations S27 and S41 concerning the recognition of command keywords..

As described above, the present invention provides a very user-friendly method of entering a keyword sequence by voice command. The described speech recognition controller and its method of operation allows the user to enter strings of digits in a natural manner, connected or isolated and in any fashion he likes, without requesting the user to participate in the verification of the result of the speech recognition operations. Under conditions of degraded recognition accuracy, the speech recognition control system of the present invention will limit requests to the user for reentering a digit or command keyword or group of keywords to the cases that it was not able to reliably recognize a spoken keyword. Reiterations of keywords spoken by the user can thus be kept to a necessary minimum in an adaptive fashion. Moreover, according to preferred embodiments of the present invention, it is furthermore possible to provide the user with the option of requesting verification on digit groups containing any number of spoken digits if the user so desires, but without a necessity for the user to do so.

The operations described above are advantageously executed by a digital signal processor under program control. Nowadays a large variety of suitable models and types of such digital signal processors like the TI54x family of DSPs is available on the market. The term digital signal processor is intended to include implementations using general purpose micro processors or micro controllers. Other implementations using dedicated hardware like ASICs are possible. The speech recognition controller may incorporate the man machine interaction controller, or the speech recognition controller and the man machine interaction controller may be implemented on separate hardware platforms. All these modifications will be immediately apparent to those skilled in the art and are intended to be comprised in the present invention. While specific embodiments of the present invention have been shown and described herein, further modifications will become apparent to those skilled in the art. In particular, it should be noted that the command words like CLEAR, PLEASE REPEAT, OKAY, YES were chosen in the preferred embodiment only as representative English words for a particular application. Other command and reply words may of course be chosen if desired, especially for use with different languages. Hardware and software modifications may be envisaged to customize the present speech recognition controller and keyword entry method for various other applications. All such modifications which retain the basic underlying principles disclosed in claims herein are within the scope of this invention, as defined by the appended claims.

## Claims

1. A method of operating a speech recognition controller, comprising the steps of
- recognizing (S1, S11, S12, S20, S27) at least one keyword in a speech utterance enunciated by a user;
- obtaining (S2, S7, S13, S24, S40) for said at least one recognized keyword a recognition reliability which indicates how reliably said at least one keyword has been recognized correctly by the speech recognition controller;
- comparing (S3, S26, S41) said reliability with a recognition reliability threshold; and
- if said obtained reliability is lower than said recognition reliability threshold, providing (S4, S14, S32, S35) an unreliability indication to the user (S4, S14, S32);
- in response to said unreliability indication recognizing at least one further keyword; and
- correcting said at least one recognized keyword based on said at least one further keyword recognized in response to said unreliability indication to the user.

2. The method according to claim 1, wherein said unreliability indication to the user is generated as soon as a keyword has been enunciated by the user and has been recognized with a reliability lower than said recognition reliability threshold.

3. The method according to claim 1, comprising the steps of
- obtaining reliability levels for a plurality of keywords enunciated by said user;
- said indication to the user being provided relative to said plurality of keywords after the user has enunciated said plurality of keywords, if a recognition reliability for at least one keyword in said plurality is below said recognition reliability threshold.

4. The method according to claim 1 or 3, wherein keywords are enunciated by the user in groups each having a variable number of keywords, groups of keywords being separated by pauses in the user speech utterance, comprising the step of
- providing said unreliability indication to the user (S32) in response to a pause exceeding a predetermined pause time interval (S30) if a recognition reliability for at least one keyword in a group occurring before said pause signal is below said recognition reliability threshold.

5. The method according to claim 1 or 3, wherein keywords are enunciated by the user in groups each having a variable number of keywords, groups of keywords being separated by group control command keywords in the user speech utterance, comprising the steps of
- providing said unreliability indication to the user in response to recognizing a group control command keyword if a recognition reliability for at least one keyword in a group of keywords occurring before said group command keyword is below said recognition reliability threshold.

6. The method according to claims 1 or 2, wherein said keywords are enunciated by the user in groups each having a variable number of keywords, groups of keywords being separated by pauses in the user speech utterance, comprising the steps of
- in response to a pause in the user speech utterance exceeding a predetermined pause time interval, providing an indication to the user of particular keywords recognized (S37) which correspond to a group of keywords occurring before said pause; and
- correcting said particular recognized keywords in response to recognizing an error correction command keyword contained in a user speech utterance following said pause.

7. The method according to claim 1 or 2, wherein said keywords are enunciated by the user in groups each having a variable number of keywords, groups of keywords being separated by group control commands contained in the user speech utterance, comprising the steps of
- in response to recognizing a group control command keyword in the user speech utterance, providing an indication to the user of particular keywords recognized which correspond to a group of keywords occurring before said group control command keyword; and
- correcting said particular recognized keywords in response to an error correction command keyword contained in a user speech utterance following said group control command keyword.

8. The method according to any one of the claims 4 to 7, comprising the step of providing to the user a further indication (S38) relative to a group of keywords if all keywords of said group have been recognized with a reliability above said recognition reliability threshold.

9. The method according to any one of the preceding claims, wherein said reliability threshold is dependent on at least one of the parameters level of background noise, voice pitch level and/or dependent on the keyword recognized.

10. The method according to any one of the preceding claims, wherein said unreliability indication to the user is at least one of an information tone, an acoustic speech signal generated by a speech synthesizer, an acoustic output of what has been recognized as said at least one recognized keyword.

11. The method according to any one of the preceding claims, wherein the step of correcting said at least one recognized keyword comprises discarding said at least one recognized keyword if said reliability level evaluated for said keyword indicates a recognition reliability below said recognition reliability threshold.

12. The method according to any one of the claims 3 to 10, wherein said correction step comprises discarding (S33) a group of recognized keywords (S30) if a recognition reliability for at least one keyword in said group is below said recognition reliability threshold, and replacing said group by a further group of recognized keywords recognized in response to said unreliability indication.

13. The method according to any one of the preceding claims, comprising the step of
- if said reliability level evaluated for a keyword enunciated by a user indicates a recognition reliability below said recognition reliability threshold, storing speech recognition parameters obtained during the step of recognizing said keyword; and
- recognizing a keyword enunciated by the user in response to said unreliability indication using said stored parameters.

14. The method according to any one of the preceding claims, wherein said step of recognizing said at least one keyword comprises
- receiving a speech signal corresponding to said speech utterance enunciated by the user;
- transforming said speech signal into a parametric description in order to obtain a sequence of feature vectors;
- comparing said sequence of feature vectors with feature patterns stored in memory; and
- recognizing said at least one keyword by selecting a pattern that provides a best match with said sequence or at least a subsequence of said feature vectors according to a given optimality criterion.

15. The method according to claim 14, wherein said step of obtaining a recognition reliability includes
- obtaining in accordance with a similarity criterion a first similarity value between said best matching feature pattern and said sequence or subsequence of feature vectors;
- obtaining in accordance with said similarity criterion further similarity values between other feature patterns stored in memory and said sequence or subsequence of feature vectors;
- obtaining said recognition reliability based on a linear or logarithmic difference between said first similarity value and at least one similarity value selected from said further similarity values.

16. The method according to claim 15, including
- obtaining said recognition reliability furthermore based on said first similarity value.

17. The method according to any one of the claims 1 to 13, wherein said step of obtaining said recognition reliability involves neural network procedure.

18. The method according to any one of the preceding claims, wherein a keyword corresponds to a user enunciation of a single digit or a continuous sequence of a plurality of digits or a single command or a continuous sequence of a plurality of commands or a continuous sequence consisting of at least one digit and at least one command.

19. The method according to any one of the preceding claims, wherein said speech recognition controller is operated in a mobile telephone.

20. The method according to any one of the preceding claims, wherein said unreliability indication is provided to the user only if said reliability level indicates a reliability below said recognition reliability threshold.

21. A speech recognition control apparatus comprising
- means (2,3,4) for recognizing at least one keyword in a speech utterance enunciated by a user;
- means (5) for obtaining for said at least one recognized keyword a recognition reliability which indicates how reliably said at least one keyword has been recognized correctly by the speech recognition controller;
- man machine interaction means (6) for comparing said obtained reliability with a recognition reliability threshold, and if said obtained reliability is lower than said recognition reliability threshold, for providing an unreliability indication to the user;
- said man machine interaction means (6) being adapted for correcting said at least one recognized keyword based on at least one further keyword enunciated by the user and recognized in response to said unreliability indication to the user.

22. A speech control apparatus comprising a digital signal processor programmed to execute a method according to any one of the claims 1 to 20.

23. A mobile telephone comprising a speech recognition control apparatus according to any one of the claims 21 and 22.
